# EUROPÄISCHE PATENTSCHRIFT

(11) **EP 1 700 255 B1**
(45) Veröffentlichungstag und Bekanntmachung des Hinweises auf die Patenterteilung: **06.06.2012**
(21) Anmeldenummer: 04804781.5
(22) Anmeldetag: 13.12.2004
(51) Int. Cl.: G06K 19/07, G06F 3/14

(54) **DISPLAY FÜR DIE ANZEIGE VON PROGRAMMIERBAREN BARCODES**
DISPLAY UNIT FOR DISPLAYING PROGRAMMABLE BARCODES
SYSTEME D'AFFICHAGE POUR L'AFFICHAGE DE CODES A BARRES PROGRAMMABLES

(30) Priorität: 30.12.2003 DE 10361683
(43) Veröffentlichungstag der Anmeldung: 13.09.2006
(73) Patentinhaber: SIEMENS AKTIENGESELLSCHAFT, 80333 München (DE)
(72) Erfinder: HAUCH, Jens, 91056 Erlangen (DE); BRABEC, Christoph, A-4040 Linz (AT)
(86) Internationale Anmeldenummer: PCT/EP2004/053416
(87) Internationale Veröffentlichungsnummer: WO 2005/064531

(56) Entgegenhaltungen:
- EP-A- 1 231 578
- EP-A1- 1 507 164
- DE-A1- 10 209 400
- DE-A1- 19 730 051
- US-A- 5 153 842
- US-A1- 2002 167 500
- US-A1- 2003 057 284
- PATENT ABSTRACTS OF JAPAN Bd. 2003, Nr. 12, 5. Dezember 2003 (2003-12-05) & JP 2003 222893 A (OPTREX CORP; ASAHI GLASS CO LTD), 8. August 2003 (2003-08-08)

## Beschreibung

Die vorliegende Erfindung betrifft einen freiprogrammierbaren Barcode und insbesondere ein Display, das vorteilhaft an die Anzeige von Barcodes angepasst ist.

Barcodes oder auch Strichcodes sind als Identifikationskennzeichnungen für Waren allgemein bekannt und finden weitläufig als solche Anwendung. Vor allem seit Einführung des Scanner-Kassensystems im Einzelhandel sind Barcodes landläufig in Erscheinung getreten. Im allgemeinen sind Barcodes an einer Sequenz von parallelen Linien bzw. Balken zu erkennen, deren Breite und/oder deren Abstand variieren. Der wohl bekannteste Barcode dieser Art ist der EAN-Code (European Article Number Code) bzw. der UPC-Code (Universal Product Code), die beide in den 70er Jahren des letzten Jahrhunderts für die Kennzeichnung von Waren speziell für den Lebensmittelbereich entwickelt wurden und seitdem im gesamten Detailhandel im Einsatz sind.

Prinzipiell kann der Barcode als ein Binärcode interpretiert werden, der aus einem Feld von parallel angeordneten Strichen und Trennlücken besteht. Je nach verwendeter Codierung bzw. hier Symbologie ist eine vorbestimmte Anzahl an Strichen und Trennlücken als ein Musterelement einem vorbestimmten Zeichen bzw. Symbol zugeordnet. Mittels einer entsprechenden Zuordnungstabelle kann eine Barcode-Sequenz in geeignete Teilsequenzen unterteilt und dekodiert werden. Der EAN-Code bzw. der UPC-Code basiert zum Beispiel auf einer Zuordnungstabelle, die zwei Striche und zwei Trennlücken, die sich jeweils abwechseln, zusammenfasst und dem resultierenden Musterelemente jeweils eines von 20 möglichen Symbolen zuordnet, d.h. die Zahlen 0 bis 9 für die linken Ziffern mit ungerader Parität und die Zahlen 0 bis 9 für die rechten Ziffern mit gerader Parität. Der Vollständigkeit halber ist zu erwähnen, dass sich die 20 möglichen Musterelemente bzw. Symbole aus zwei Strichen und zwei Trennlücken ergeben, die 1, 2 oder 4 Einheiten breit sein dürfen und in Summe eine Breite von 7 Einheiten ergeben müssen.

Diese Barcodes sind herkömmlicherweise entweder direkt auf Produkten, Waren bzw. Verpackungen aufgedruckt oder die Produkte, Waren bzw. deren Verpackungen sind mit Aufklebern versehen, die den entsprechenden Barcode tragen. Die Anordnung von Strichen und Trennlücken definiert im optischen Bereich eine Abfolge von Hell-/Dunkel-Bereichen, die zumeist unter Verwendung von optischen Abtastern, z.B. optischen Laserscannern, erfasst werden und anschließend entsprechend des Codiersystems in die Symbolfolge gewandelt werden. Für die vorstehend angesprochenen Detailwaren, die mit einem EAN-Code bzw. der UPC-Code basierenden Barcode versehen sind, steht zumeist eine Datenbank zur Verfügung, um im nachfolgend eine Zuordnung von dckodierter Symbolfolge und Wareninformation wie zum Beispiel Produktname, Produktkategorie, Produktpreis etc. zu erhalten.

Die Barcodes unabhängig von der gewählten Symbologie unterliegen jedoch dem Nachteil, dass die Informationsdichte durch einen Mindestkontrast der Hell-/Dunkelbereiche begrenzt ist. Folglich ist ebenfalls die Gesamtmenge an in einem Barcode kodierten Informationen beschränkt, da im allgemeinen die Barcodes nur begrenzte Abmessungen aufweisen dürfen. Ferner sind einmal gedruckte und auf die zu kennzeichnende Detailware aufgebrachte Barcodes dauerhaft, d.h. wenn der Bedarf besteht, die mittel eines Barcodes kodierten Informationen zu ändern, ist ein neuer Barcode aufzubringen.

Aufgrund vorstehend genannter Nachteile, sind Funktransponder (engl.: radio frequency identification transponder, RFIDtransponder, RFID-tags) entwickelt worden, die sich wachsender Popularität erfreuen. Funktransponder sind elektronische Datenspeichersysteme, deren gespeicherte Informationen drahtlos ausgelesen werden können. Vorteilhafterweise werden die Funktransponder durch ein elektromagnetisches Signal mit Energie versorgt, so dass keine systemeigene Energiequelle vorgesehen werden muss. Weiterhin sind Funktransponder erhältlich, deren gespeicherte Informationen re-programmierbar sind. Die Gesamtmenge an gespeicherten Informationen ist im Wesentlichen nur durch die technologischen Grenzen der verwendeten Speicherchips bestimmt. Mit Forschreiten der Fertigungstechnologie und insbesondere von organischen Schaltkreisen sind Funktransponder kostengünstig herzustellen und zumindest auf dem Weg, die bisher verwendeten Barcodes zur Kennzeichnung von Detailwaren abzulösen. Die Funktransponder und insbesondere wieder-beschreibbare Transponder sind geeignet, einen Teil der Nachteile von Barcodes zu überwinden.

Für die Erfassung von Barcodes bzw. die Abfrage von Transpondern werden jedoch technologisch unterschiedliche Erfassungssysteme verwendet, so dass eine Migration von einem Kennzeichnungssystem auf das andere einen großen Aufwand bedeutet.

Barcodes können auch durch elektronische Displays angezeigt werden. Grundsätzlich sind zur elektronischen Anzeige verschiedene Technologien bekannt. Neben Plasma- und LED-Anzeigen sind Displays basierend auf organischen Materialien bekannt. Aus der EP 1 507 164 A1 ein Matrix-Display bekannt, dass auf der Technologie der elektrochemischen, bzw. der elektrochromen Anzeige basiert. Eine weitere Anzeigetechnik wie z.B. die Flüssigkristallanzeige ist aus den Patent Abstracts of Japan zur JP 2003 222893 A bekannt. Die US 2002/167500 A1 offenbart eine Display, das zur Anzeige von Barcodes verwendet wird. Je nach Ausgestaltung der Elektrodenform und -anordnung sind diese besonders gut zur Anzeige von Barcodes geeignet. Die US 6 082 620 A4 beschreibt ein Beispiel einer elektronischen Barcode-Anzeige auf Basis eines Flüssigkristalldisplays.

Unter Bezugnahme auf die vorstehen diskutierten Nachteile, ist es eine Aufgabe der vorliegenden Erfindung, einen programmierbaren Barcode bereitzustellen, der angepasst ist, verschiedene Informationen für eine Erfassung durch einen Barcode-Scanner zu speichern.

Eine weitere Aufgabe der Erfindung ist es einen programmierbaren Barcode bereitzustellen, der vorteilhaft mit einem Transponder gekoppelt ist, so dass die Vorteile beider Systeme vereinigt werden, während Nachteile durch die Kombination vermeidbar sind.

Ein Aspekt der vorliegenden Erfindung wird durch einen auf Display-Technologie basierenden Barcode gelöst, der mittels zumindest einer Schnittstelle programmierbar ist, so dass die in dem Barcode kodierten Informationen veränderbar sind.

Ein weiterer Aspekt der vorliegenden Erfindung ist eine vorteilhafte Kombination des auf Display-Technologie basierenden Barcodes mit einem Transponder, die durch eine Schnittstelle gekoppelt sind, so dass der Transponder in der Lage ist, den durch das Display angezeigten Barcode zu bestimmen.

Die vorliegende Erfindung wird durch ein Display nach Anspruch 1 gelöst. Vorteilhafte Ausführungsformen und Weiterbildungen sind in den abhängigen Ansprüchen definiert.

Gemäß einem ersten Aspekt der Erfindung wird ein programmierbares Display für eine Anzeige von Barcodes bereitgestellt. Das Display weist hierzu eine Vielzahl an streifenförmigen Displayelementen, die im Wesentlichen parallel und mit einem vorbestimmten Abstand zueinander angeordnet sind. Jedes streifenförmigen Displayelement ist unabhängig angesteuert und schaltbar bzw. zuschaltbar. Eine jeweils vorbestimmte Anzahl an Displayelementen wird für die Darstellung eines Streifens des Barcodes verwendet. Analog wird eine jeweils vorbestimmte Anzahl an Displayelementen für die Darstellung eines Trennstreifens des Barcodes verwendet. Der darzustellende Barcode setzt sich aus einer Vielzahl an Streifen und Trennstreifen zusammen.

Erfindungsgemäß wird für jeden Streifen des Barcodes jeweils eine Gruppe von einer vorbestimmten Anzahl an streifenförmigen Displayelementen gemeinsam geschaltet und analog wird für jeden Trennstreifen des Barcodes jeweils eine Gruppe von einer vorbestimmten Anzahl an streifenförmigen Displayelementen gemeinsam geschaltet.

Vorteilhafterweise weisen die streifenförmigen Displayelemente mindestens zwei schaltbare Zustände aufweisen. Jeweils einer der Zustände ist für die Darstellung eines Streifens bzw. eines Trennstreifens vorgesehen.

Das Display ist ein meta-stabiles Display, das als elektrochromes Display ausgeführt ist.

Gemäß einer Ausführungsform der Erfindung ist eine Ansteuerelektronik für die Ansteuerung der streifenförmigen Displayelemente vorgesehen. Die Ansteuerelektronik umfasst zumindest eine Schnittstelle, die angepasst ist Signale zu empfangen, so dass ein Barcodes auf dem Display abgebildet wird. Vorteilhafterweise basiert die Ansteuerelektronik auf organischen bzw. polymeren Schaltkreisen. Weiterhin kann das Display vorteilhaft mit einem Funk-Transponder (500) gekoppelt werden.

Gemäß einem weiteren Aspekt der Erfindung wird ein Funk-Transponder mit einem Display für eine Anzeige von Barcodes bereitgestellt. Der Funk-Transponder ist mit dem Display für die Abbildung der Barcodes gekoppelt. Das Display weist hierzu eine. Vielzahl an streifenförmigen Displayelementen, die im Wesentlichen parallel und mit einem vorbestimmten Abstand zueinander angeordnet sind. Jedes streifenförmige Display-element ist unabhängig angesteuert und schaltbar. Eine jeweils vorbestimmte Anzahl an Displayelementen wird für die Darstellung eines Streifens des Barcodes verwendet. Analog wird eine jeweils vorbestimmte Anzahl an Displayelementen für die Darstellung eines Trennstreifens des Barcodes verwendet. Der darzustellende Barcode setzt sich aus einer Vielzahl an Streifen und Trennstreifen zusammen.

Der Funk-Transponder gemäß einer Ausführungsform der Erfindung weist ein Display der vorstehend beschriebenen Art.

Einzelheiten und bevorzugte Ausführungsformen des erfindungsgemäßen Gegenstands ergeben sich aus den abhängigen Ansprüchen sowie den Zeichnungen, anhand deren im folgenden Ausführungsbeispiele detailliert erläutert werden, so dass der erfindungsgemäßc Gegenstand klar ersichtlich wird. In den zeichnungen zeigen:
- Fig. 1a: eine schematische Darstellung eines erfindungsgemäßen Displays zur Anzeige eines Barcodes;
- Fig. 1b: eine schematische Darstellung eines erfindungsgemäßen Displays nach Fig. 1a mit Abbildung einer Barcodedarstellung;
- Fig. 2a: eine schematische Darstellung eines vergrößerten Ausschnitts aus dem erfindungsgemäßen Display zur Anzeige eines Barcodes nach Fig. 1a;
- Fig. 2b: eine schematische Darstellung eines vergrößerten Ausschnitts aus dem Display nach Fig. 1b mit Abbildung einer Barcodedarstellung; und
- Fig. 3: eine schematische Darstellung einer Ansteuerung eines erfindungsgemäßen Displays zur Anzeige von Barcodes.

Ähnliche und gleiche Teile, Elemente, Komponenten etc., die in den Figuren dargestellt sind, sind durch gleiche Bezugszeichen gekennzeichnet.

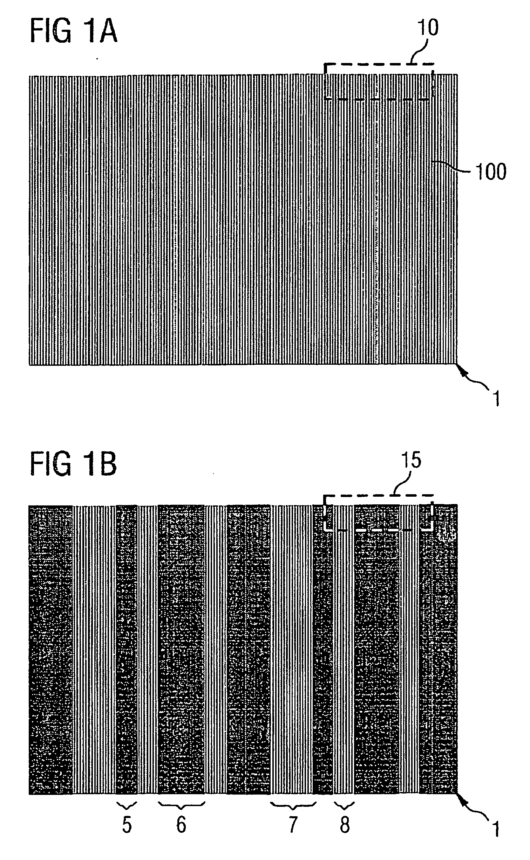

Fig. 1a sowie Fig. 1b zeigen eine Ansicht eines erfindungsgemäßen Displays für die Anzeige eines Barcodes. In Fig. 1a ist ein Display 1, insbesondere ein Ausschnitt eines Displays 1 dargestellt, das für die Darstellung von Barcodes geeignet ist. Das Display 1 zeigt vorzugsweise eine streifenförmige Abbildungsstruktur, die vorteilhafterweise an die Abbildung von 1-dimensionalen Barcodes angepasst ist, wie zum Beispiel die einleitend erwähntem EAN-kodierten bzw. UPC-kodieren Barcodes. Diese setzten sich definitionsgemäß aus Streifen und streifenförmigen Trennbereichen zusammen, deren Abstands- und Breitenvariationen die Kodierung ermöglichen. Die angedeutete streifenförmige Strukturierung des Displays ist für die Darstellung von 1-dimensionalen Barcodes hinreichend, die im Allgemeinen übliche Pixelstruktur von Displays wird hierfür nicht benötigt.

Unter Bezugnahme auf Fig. 1b ist beispielhaft ein Ausschnitt eines Barcodes dargestellt, der in einem Ausschnitt eines Displays 1 abgebildet ist. Wie vorstehend erwähnt ist der Barcode ans einer streifenförmige Abbildungsstruktur gebildet, von der beispielhaft ein schmaler Streifen als 5, ein breiter Streifen als 6, ein schmaler Trennstreifen als 8 und ein breiter Trennstreifen als 7 gekennzeichnet ist. Es soll bemerkt werden, dass die dargestellte Anordnung bzw. die dargestellten Abmessungen rein illustrativ sind und die vorliegende Erfindung in keinster Weise darauf beschränkend ist.

Entsprechend der Verwendung und des Einsatzgebietes von Barcodes kann angenommen werden, dass ein auf dem Display anzuzeigender Barcode für eine weitgehend lange Zeitdauer angezeigt wird, d.h. weitgehend lange im Vergleich mit den sonst im Gebiet von Displays angestrebten Anzeigeintervallen, die im Mikrosekunden-Bereich liegen. Die Anzeige von Barcodes erfolgt eher im Minuten-, Stunden- bzw. Tage-Bereich, d.h. um Größenordungen höher als übliche Display-Refreshraten. Dementsprechend sind meta-stabile Displays für den oben angestrebten Verwendungszweck anwendbar. Meta-stabile Displays zeichnen sich dadurch aus, dass sie entweder keinen Refresh der Abbildung und entsprechend kein Refreshzyklus aufweisen oder zumindest eine hohe Latenzzeit der Darstellung aufweisen, so dass wenige Refreshzyklen benötigt werden. Da ein Refresh, d.h. ein Auffrischen der Displaydarstellung energieverbrauchend ist sind die meta-stabile Displays folglich energiesparend. Die gewöhnlich als Nachteil bezeichnete geringe Anzeigegesnhwindigkeit von Änderungen in einer Abbildung auf einem meta-stabilen Display trägt nicht zum Nachteil der vorliegenden Erfindung bei, da die mit dem Display abzubildenden Barcodes konstant und für eine lange Zeitdauer erfolgen. Von Interesse sind ferner insbesondere meta-stabile low-cost Displays, die zusätzlich vorzugsweise flexible ausführbar sind. Die Ansteuerung des vorzugsweise flexiblen meta-stabilen low-cost Displays mit geringem Energieverbrauch kann über eine geeignet angepasste Schnittstelle erfolgen. Das meta-stabile Display kann weiterhin als ein elektrochromes oder elektrophoretisches Display ausgeführt werden.

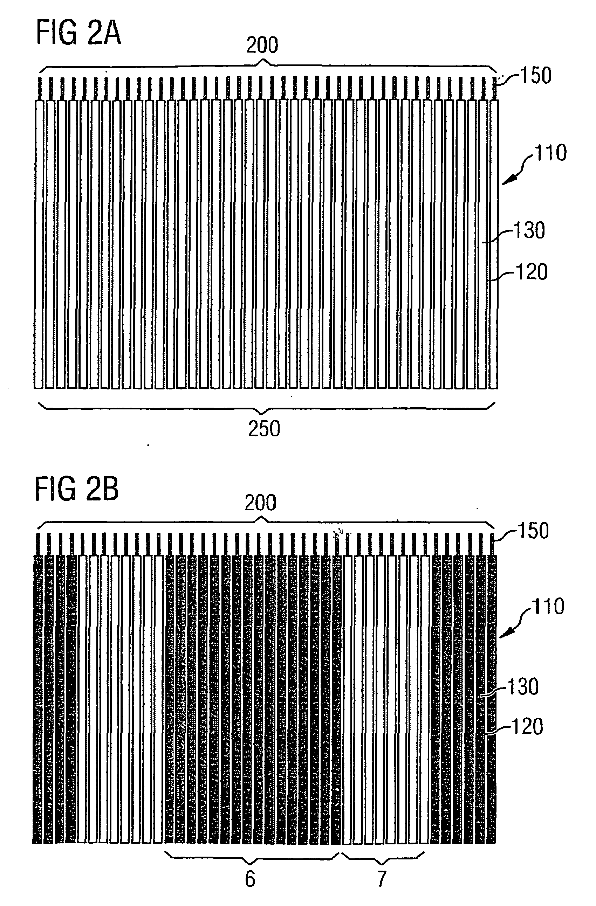

Die Fig. 2a und Fig. 2b zeigen vergrößerte Ausschnitte des in Fig. 1a bzw. Fig, 1b dargestellten Displays 1, um die vorteilhafte Struktur des Displays detailliert darzustellen. Die gewählten Ausschnitte sind in den Fig. 1a und 1b als Bereiche 10 bzw. 15 kenntlich gemacht.

Unter Bezugnahme auf Fig. 2a ist die vorteilhafte streifenförmige Struktur 100 des erfindungsgemäßen Displays zu erkennen. Die streifenförmige Struktur 100 setzt sich aus einer Vielzahl 250 an einzelnen streifenförmigen Displayelementen 110, 130 zusammen, die parallel zueinander angeordnet und vorzugsweise mit einem im Wesentlichen äquidistant mit einem vorbestimmten Anstand voneinander beabstandet sind. Der durch diesen Abstand definierte Bereich 120 zwischen zwei streifenförmigen Displayelementen 110, 130 kann ebenfalls Abstandshalter 120 bezeichnet werden. Die streifenförmigen Displayelementen 110, 130 sind einzeln mittels eines Ansteueranschlusses 150 schaltbar. Die Ansteueranschlüsse 150 können in ihrer Gesamtheit als Displayschnittstelle 200 bezeichnet werden.

Unter einem Schalten eines streifenförmigen Displayelements 110, 130 soll verstanden werden, dass das streifenförmige Displayelement im Wesentlichen zwei Zustände annehmen kann, die sich im wesentlichen in ihrem Kontrast voneinander unterscheiden, so dass sich zwei im unterschiedlichem Zustand befindliche streifenförmige Displayelemont erfassbar voneinander unterscheiden. Ein vorteilhafter Kontrast bietet sich durch hell bzw. dunkel-schaltbare streifenförmige Displayelemente 110, 130, wie dies zum Beispiel in der schwarz/weißen Darstellung der Fig. 1b bzw. der Fig. 2b erkennbar ist. Die Erfindung ist jedoch nicht darauf zu beschränken.

Unter Bezugnahme auf Fig. 2b ist ein vergrößerter Ausschnitt der Barcodeabbildung auf dem Display 1 von Fig. 1b, Ausschnitt 15 zu erkennen. Um einen Streifen 6 bzw. einen Trennbereich 7 von Streifen für eine Barcodeabbildung zu erzeugen, werden vorzugsweise jeweils eine Vielzahl an einzelnen streifenförmigen Displayelementen gemeinsam geschaltet. Dementsprechend wird der breite Streifen 6 illustrativ mittels einer gemeinsamen Schaltung in einen gleichen ersten Schaltzustand von 16 einzelnen streifenförmigen Displayelementen 110, 130 erzeugt, während der Trennbereich 7 durch eine gemeinsame Schaltung in einen gleichen zweiten Schaltzustand von 8 einzelnen streifenförmigen Displayelementen 110, 130 erzeugt wird, wobei sich der erste und der zweite Schaltzustand voneinander unterscheiden, so dass ein entsprechender Kontrast zwischen dem Streifen 6 und dem Trennbereich 7 erkennbar ist. Die gewünschte Breite von Streifen bzw. Trennbereichen kann durch eine Auswahl an einer vorbestimmten Anzahl von streifenförmigen Displayelementen 110, 130 erfolgen. So ist der Streifen 6 der Fig. 2b ein breiter Streifen, der mittels 16 gemeinsam geschalteter Displayelemente 110, 130 erzeugt wird, während der Trennbereich 7 der Fig. 2b einem schmalen Trenn- .. bereich entspricht, der mittels 8 gemeinsam geschalteter Displayelemente 110, 130 erzeugt wird. Weitere Breiten der Streifen bzw. Trennelementen lassen sich mittel vorbestimmt definierter Anzahlen an gemeinsam zu schaltenden Displayelementen 110, 130 vereinbaren. Die nicht schaltbaren Bereiche 120 zwischen den Displayelementen, auch als Abstandhalter 120 bezeichnet, sind hierzu derart ausgebildet, dass sie den Gesamtkontrast, der durch die gemeinsame Schaltung einer vorbestimmten Anzahl an Displayelemente 110, 130 erzeugt wird, nicht maßgeblich beeinflussen, so dass in einer Gesamtbetrachtung des auf dem Display 1 abgebildeten Barcodes die durch die Abstandhalter 120 verursachten Unterbrechungen in der Abbildungsstruktur nicht bedeutend sind, d.h. nicht eine Erfassung des Barcodes durch ein optisches Erfassungsmittel wie zum Beispiel ein Laserscanner stören.

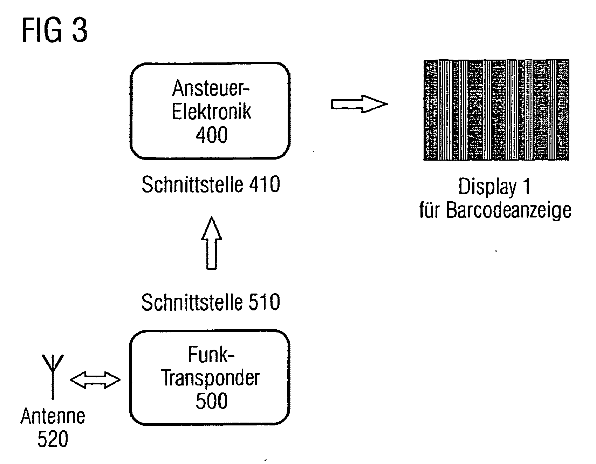

Fig. 3 zeigt eine Ausführungsform einer Ansteuerung des erfindungsgemä0en Displays, wie es vorstehend diskutiert wird. Die schematische Komponentendarstellung von Fig. 3 zeigt eine Ansteuerelektronik 400 die dem Display 1 zugeordnet ist und die mit den Ansteueranschlüssen 150 bzw. mit der Displayschnittstelle 200 koppelbar ist. Die Ansteuerelektronik 400 dient der Ansteuerung bzw. dem Schalten der einzelnen Displayelemente 110, 130, um in vorstehend beschriebenem Verfahren Barcodes mittels des Displays 1 abzubilden. Hierfür ist die Ansteuerelektronik 400 an die Eigenschaften des Displays 1 angepasst, d.h. die Ansteuerelektronik 400 kann einen Speicher enthalten, in dem die Schaltzustände der Displayelemente 110, 130 gespeichert sind, um einen eventuell notwendigen Display-Refresh zu ermöglichen. Insbesondere dient die Ansteuerelektronik und kann ferner eine Stromversorgung für.das Display 1 umfassen und insbesondere eine Schnittstelle 410 bereitstellen, mittels deren die der anzuzeigende Barcode an das Display 1 übertragen werden kann.

Die dargestellte Ausführungsform umfasst ferner einen Funk-Transponder 500 (bzw. einen RFID Transponder), der mit einem auslesbaren Speicher ausgestattet ist. Vorzugsweise kommt hierfür ein programmierbarer Funk-Transponder 500 mit einem sowohl lesbaren als auch beschreibbaren Speicher zum Einsatz. Anwendungsspezifisch kommuniziert der Funk-Transponder 500 mittels einer Antenne 520 mit einer entsprechenden Lese- bzw. Schreib-Vorrichtung, die an das Auslesen bzw. das Schreiben von Informationen angepasst ist, die in dem Speicher des Funk-Transponder gespeichert sind. Der erfindungsgemäße Funk-Transpnnder 500 ist mittels einer Schnittstelle 510 an die Schnittstelle 410 der Ansteuerelektronik gekoppelt, so dass Signale von dem Funk-Transponder 500 an die Ansteuerelektronik 400 des Displays 1 übertragen werden können.

Als Anwendungsbeispiel ist in Hinblick auf das Ausführungsbeispiel eine vorteilhafte Kombination von Barcode und Funk-Transponder 500 realisierbar. Einerseits können Informationen in dem Speicher des Funk-Transponders 500 mittel Funk auslesbar abgelegt sein. Andererseits ermöglicht die Kopplung von Funk-Transponder 500 und Display 1 die Abbildung eines Barcodes, der zumindest einen Teil der in dem Funk-Transponder 500 gespeicherten Informationen kodiert wiedergibt. Vorteilhafterweise umfasst hierzu entweder die Ansteuerelektronik 400 oder die Elektronik des Funk-Transponders 500 eine Komponente, die für die Kodierung der Barcodeabbildung entsprechend einer gewünschten Symbologie sorgt. Die Komponenten könnte ferner eine Vielzahl an Symbologien unterstützen, die wahlweise zum Einsatz kommen können.

Die Ansteuerelektronik basiert vorzugsweise auf organischen Schaltungen, auf polymeren Schaltungen bzw. Schaltkreisen organischer oder polymerer Bauelemente. Organische oder polymere Schaltungen und Schaltkreise lassen sind kostengünstig herstellen und sind flexible ausführbar, was insbesondere in Kombination mit einem flexiblen Display 1 von Interesse ist.

Vorteilhafterweise kann weiterhin die Ansteuerelektronik 400 vertikal in das Display 1 integriert sein, d.h. vertikal angeordnet zu der Abbildungsoberfläche des Displays 1. Weiterhin vorzugsweise kann ferner die Elektronik des Funk-Transponders 500 ebenfalls in einer integrierenden Weise vorgesehen sein, so dass die in Fig. 3 dargestellten Komponenten in einer gemeinsamen Umhausung angeordnet sein können. Eine vertikale Integration ist hierbei insbesondere vorteilhaft.

## Patentansprüche

1. Programmierbares Display für eine Anzeige von Barcodes, umfassend:
- eine Vielzahl an streifenförmigen Displayelementen (110, 130), die im Wesentlichen parallel und mit einem vorbestimmten Abstand (120) zueinander angeordnet sind;
wobei jedes streifenförmige Displayelement (110, 130) zuschaltbar ansteuerbar ist;
wobei jeweils vorbestimmte Anzahlen an Displayelementen (110, 130) für die Darstellung von Streifen (5, 6) bzw. Trennstreifen (7, 8) des Barcodes verwendet werden,
und wobei die Abstände zwischen den Displayelementen als nicht schaltbare Bereiche derart ausgebildet sind, dass sie den Gesamtkontrast, der durch die gemeinsame Schaltung einer vorbestimmten Anzahl an Displayelementen erzeugt wird, nicht maßgeblich beeinflussen,
**dadurch gekennzeichnet, dass** das Display als energiesparendes, meta-stabiles, elektrochromes Display (1) ausgeführt ist, das eine derart hohe Latenzzeit der Darstellung aufweist, dass die Display-Refreshrate im Minuten-, Stunden- oder Tage-Bereich liegt.

2. Display gemäß Anspruch 1, wobei für jeden Streifen (5, 6) bzw. für jeden Trennstreifen (7, 8) des Barcodes jeweils eine Gruppe von einer vorbestimmten Anzahl an streifenförmigen Displayelementen (110, 130) gemeinsam geschaltet wird.

3. Display gemäß Anspruch 1 oder Anspruch 2, wobei die streifenförmigen Displayelemente (110, 130) mindestens zwei schaltbare Zustände aufweisen, wobei einer der Zustände einem Streifen (5, 6) und der andere der Zustände einem Trennstreifen (7, 8) zuordenbar ist.

4. Display gemäß einem der vorstehenden Ansprüche, wobei eine Ansteuerelektronik (400) für die Ansteuerung der streifenförmigen Displayelemente (110, 130) vorgesehen ist, die eine Schnittstelle (410) aufweist.

5. Display gemäß Anspruch 4, wobei die Ansteuerelektronik (400) eine Schnittstelle (410) aufweist, die geeignet ist, Signale zu empfangen, die eine Erzeugung eines Barcodes bewirken.

6. Display gemäß Anspruch 4 oder Anspruch 5, wobei die Ansteuerelektronik (400) auf organischen Schaltkreisen basiert.

7. Funktransponder mit einem Display für eine Anzeige von Barcodes, wobei der Funktransponder (500) mit dem Display (1) für die Abbildung der Barcodes gekoppelt ist; wobei das Display (1) ein Display gemäß einem der vorstehenden Ansprüche 1 bis 6 ist.

## Claims

1. Programmable display unit for displaying barcodes, comprising:
- a multiplicity of strip-shaped display elements (110, 130) arranged substantially parallel to and at a predetermined distance (120) from one another;
wherein each strip-shaped display element (110, 130) can be controlled in a connectable manner;
wherein numbers of display elements (110, 130) predetermined in each case are used for representing strips (5, 6) or spaces (7, 8) in the barcode,
and wherein the distances between the display elements are embodied as non-switchable areas such that they do not significantly affect the overall contrast produced by the joint switching of a predetermined number of display elements,
**characterised in that** the display unit is embodied as an energy-saving, metastable, electrochromic display (1) which has such a high display latency period that the display refresh rate lies in the range of minutes, hours or days.

2. Display unit according to claim 1, wherein one group of a predetermined number of strip-shaped display elements (110, 130) in each case is switched jointly for each strip (5, 6) or for each space (7, 8) in the barcode.

3. Display unit according to claim 1 or claim 2, wherein the strip-shaped display elements (110, 130) have at least two switchable states, with one of the states being assignable to a strip (5, 6) and the other of the states being assignable to a space (7, 8).

4. Display unit according to one of the preceding claims, wherein electronic drive circuitry (400) having an interface (410) is provided for controlling the strip-shaped display elements (110, 130).

5. Display unit according to claim 4, wherein the electronic drive circuitry (400) has an interface (410) suitable for receiving signals causing a barcode to be produced.

6. Display unit according to claim 4 or claim 5, wherein the electronic drive circuitry (400) is based on organic circuits.

7. Radio transponder having a display unit for displaying barcodes, wherein the radio transponder (500) is coupled to the display (1) for the purpose of displaying the barcodes, and wherein the display (1) is a display unit according to one of the preceding claims 1 to 6.

## Revendications

1. Système d'affichage programmable pour l'affichage de codes à barres, comprenant :
- une pluralité d'éléments (110, 130) d'affichage en forme de bande, qui sont sensiblement parallèles entre eux en étant à une distance (120) déterminée à l'avance ; chaque élément (110, 130) d'affichage en forme de bande pouvant être commandé de manière à pouvoir être mis en circuit ;
des nombres déterminés à l'avance d'éléments (110, 130) d'affichage étant utilisés pour la représentation de bandes (5, 6) ou de bandes (7, 8) de séparation du code à barres,
et dans lequel les distances entre les éléments d'affichage sont constituées sous la forme de zones ne pouvant pas être mises en circuit de manière à ce qu'elles n'influent pas de façon prépondérante sur le contraste global qui est produit par le circuit commun d'un nombre déterminé à l'avance d'éléments d'affichage,
**caractérisé en ce que** le système d'affichage est réalisé sous la forme d'un système (1) d'affichage consommant peu d'énergie, métastable, électrochrome et ayant un grand temps de latence de la représentation de sorte que le refreshrate du système d'affichage soit de l'ordre de la minute, de l'heure ou du jour.

2. Système d'affichage suivant la revendication 1, dans lequel, pour chaque bande (5, 6) ou pour chaque bande (7, 8) de séparation du code à barres, respectivement un groupe d'un nombre déterminé à l'avance d'éléments (110, 130) d'affichage en forme de bande est mis en circuit conjointement.

3. Système d'affichage suivant la revendication 1 ou revendication 2, dans lequel les éléments (110, 130) d'affichage en forme de bande ont au moins deux états de mis en circuit, l'un des états pouvant être associé à une bande (5, 6) et l'autre des états à une bande (7, 8) de séparation.

4. Système d'affichage suivant l'une des revendications précédentes, dans lequel il est prévu, pour l'excitation des éléments (110, 130) d'affichage en forme de bande, une électronique (400) d'excitation qui a une interface (410).

5. Système d'affichage suivant la revendication 4, dans lequel l'électronique (400) d'excitation a une interface (410) qui est propre à recevoir des signaux provoquant une production d'un code à barres.

6. Système d'affichage suivant la revendication 4 ou revendication 5, dans lequel l'électronique (400) d'excitation repose sur des circuits organiques.

7. Transpondeur radio ayant un système d'affichage pour un affichage de codes à barres, le transpondeur (500) radio étant couplé au système (1) d'affichage pour la reproduction du code à barres le système (1) d'affichage étant un système d'affichage suivant l'une des revendications précédentes 1 à 6.
